# FASCICULE DE BREVET EUROPEEN

(11) **EP 3 173 150 B1**
(45) Date de publication et mention de la délivrance du brevet: **15.05.2019**
(21) Numéro de dépôt: 16200179.6
(22) Date de dépôt: 23.11.2016
(51) Int. Cl.: B05B 9/00, B05C 1/06, B29C 33/58, B25J 9/16, G05D 1/02, B05B 3/18, B05B 1/20, B05C 5/02

(54) **SYSTEME D'APPLICATION D'UN FLUIDE SUR UNE SURFACE**
SYSTEM ZUR AUFBRINGUNG EINES FLUIDS AUF EINE OBERFLÄCHE
SYSTEM FOR APPLYING A FLUID TO A SURFACE

(30) Priorité: 25.11.2015 FR 1561377
(43) Date de publication de la demande: 31.05.2017
(73) Titulaire: Airbus Operations (S.A.S.), 31060 Toulouse Cedex 9 (FR)
(72) Inventeur: BIGNON, Nicolas, 44860 SAINT AIGNAN GRANDLIEU (FR); LANDEL, Pierre-Albert, 86180 Buxerolles (FR); GOUZERH, Lucile, 44000 NANTES (FR)
(74) Mandataire: Cabinet Le Guen Maillet

(56) Documents cités:
- DE-B3-102014 116 375
- FR-A- 1 019 004
- JP-B1- 5 819 498
- US-A1- 2014 044 867
- US-A1- 2014 120 251
- US-A1- 2014 283 744
- US-A1- 2015 128 996
- US-A1- 2015 143 646

## Description

### DOMAINE TECHNIQUE

La présente invention concerne un système d'application d'un fluide sur une surface, en particulier, d'un agent démoulant sur la surface d'un moule, ainsi qu'un procédé d'application d'un produit fluide mis en oeuvre par un tel système d'application.

### ETAT DE LA TECHNIQUE ANTERIEURE

Le démoulage d'une pièce moulée, réalisée par exemple en matériaux composites, est facilité par l'application d'un agent démoulant sur la surface du moule préalablement au moulage de la pièce.

Actuellement, l'application d'un tel agent démoulant est réalisée manuellement par un opérateur qui dépose l'agent démoulant à l'aide d'une lingette imprégnée d'agent démoulant. Après une phase de réticulation partielle de l'agent démoulant, l'application se poursuit par un lissage à l'aide d'un linge et après la réticulation totale de l'agent démoulant, une nouvelle couche d'agent réticulant peut être appliquée.

Lorsque le moule présente une grande surface sur laquelle l'agent démoulant doit être appliqué, une telle application nécessite un temps relativement long pour un opérateur. En outre, une telle application n'est pas répétable car cela dépend de nombreux facteurs comme par exemple l'expérience de l'opérateur, le pourcentage d'imprégnation du linge par l'agent démoulant...

Le document FR-A-1 019 004 divulgue un système d'application d'un produit fluide sur des meubles, le document US-A-2014/0283744 divulgue un système d'application d'un adhésif, et le document US-A-2014/0044867 divulgue un spray pour appliquer un produit fluide.

Le document US-A-2014/283744 divulgue un système permettant la dépose d'un fluide sur le sol. Ce système comporte des patins rotatifs qui assurent le déplacement et la dépose du fluide. Le document DE-B-10 2014 116375 divulgue un système de nettoyage qui comporte un rouleau imprégné d'un liquide et monté à l'avant des roues. Le document JP-A-5 819498 divulgue une machine de nettoyage.

### EXPOSE DE L'INVENTION

Un objet de la présente invention est de proposer un système d'application d'un fluide sur une surface, en particulier d'un agent démoulant sur la surface d'un moule, qui ne présente pas les inconvénients de l'art antérieur et qui en particulier permet une meilleure répétabilité de l'application et évite que les roues passent sur le produit déposé.

A cet effet, est proposé un système d'application pour déposer un produit fluide sur une surface, selon la revendication 1.

Un tel système d'application permet ainsi l'application d'une quantité connue de produit fluide et une grande répétabilité de l'application quels que soient les obstacles.

Selon un mode de réalisation particulier, la tête d'application comporte plusieurs buses d'éjection réparties transversalement sous la tête d'application et en liaison fluidique avec la buse d'alimentation.

Selon un mode de réalisation particulier, la tête d'application comporte :
- un linge disposé sous la tête d'application et
- au moins une buse d'éjection en liaison fluidique avec la buse d'alimentation et disposée de manière à ce que le produit fluide s'écoulant de ladite au moins une buse d'éjection imprègne le linge.

Selon un autre mode de réalisation particulier, la tête d'application comporte :
- un linge disposé sous la tête d'application et
- au moins une buse d'éjection en liaison fluidique avec la buse d'alimentation et disposée de manière à ce que le produit fluide s'écoulant de ladite au moins une buse d'éjection soit projeté en avant du linge.

Avantageusement, le système de guidage comporte, dans le sens d'avancement du système d'application :
- deux détecteurs de contact disposés à l'avant du châssis, l'un à bâbord et l'autre à tribord, et
- deux détecteurs de vide sous le châssis et à l'avant du système de locomotion, l'un à bâbord et l'autre à tribord.

Selon un mode de réalisation particulier, le châssis est constitué d'un châssis tracteur et d'un châssis tracté, le châssis tracteur portant le système de locomotion et le système de motorisation, le châssis tracté portant la tête d'application, et le châssis tracteur et le châssis tracté sont reliés par une attache souple.

Selon un autre mode de réalisation particulier, le châssis comporte une partie principale qui supporte le système de locomotion et une partie secondaire qui est montée mobile en rotation autour de la partie principale et qui supporte le réservoir, la tête d'application et la buse d'alimentation.

Selon un autre mode de réalisation particulier, le châssis comporte une partie principale qui supporte le système de locomotion et une partie secondaire qui est montée mobile en rotation à l'intérieur de la partie principale et qui supporte le réservoir, la tête d'application et la buse d'alimentation.

Selon une première variante, le système de locomotion comprend au moins deux roues.

Avantageusement, chaque roue est montée sur le châssis par l'intermédiaire d'une suspension.

Selon une autre variante, le système de locomotion comprend deux chenilles parallèles, la bande de roulement de chaque chenille comporte plusieurs ventouses, et le système d'application comporte un dispositif de génération de vide relié fluidiquement à chaque ventouse afin de générer du vide au niveau de chacune des ventouses en contact avec la surface.

Avantageusement, le système d'application comporte au moins une lampe disposée à l'arrière du système d'application pour éclairer la surface à l'arrière de la tête d'application.

Avantageusement, le système d'application comporte une mémoire prévue pour enregistrer un parcours à effectuer sur la surface à partir d'un point de départ, et le système de guidage est adapté à lire le parcours, à amener le système d'application au point de départ et à diriger le système d'application en fonction dudit parcours.

L'invention propose également un procédé d'application d'un produit fluide à l'aide d'un système d'application selon l'une des modes de réalisation précédents, le procédé consistant en :
- une étape de positionnement au cours de laquelle le système d'application est positionné le long d'un premier bord de la surface,
- une étape de pré-progression au cours de laquelle le système d'application progresse le long du premier bord jusqu'à atteindre un deuxième bord,
- une première étape de réorientation au cours de laquelle le système d'application fait demi-tour,
- une première étape de progression au cours de laquelle le système d'application progresse jusqu'à atteindre un troisième bord,
- une première étape de test au cours de laquelle, l'unité de contrôle vérifie si toute la surface a été recouverte avec du produit fluide,
dans le cas où toute la surface a été recouverte, le procédé s'arrête,
dans le cas contraire, le procédé se poursuit par
- une deuxième étape de réorientation au cours de laquelle le système d'application fait demi-tour,
- une deuxième étape de progression au cours de laquelle le système d'application progresse jusqu'à atteindre le deuxième bord,
- une deuxième étape de test au cours de laquelle, l'unité de contrôle vérifie si toute la surface a été recouverte avec du produit fluide,
dans le cas où toute la surface a été recouverte, le procédé s'arrête,
dans le cas contraire, le procédé se poursuit par une étape de bouclage au cours de laquelle le procédé boucle sur la première étape d'orientation.

Avantageusement, la première étape de test est réalisée simultanément à la première étape de progression et la deuxième étape de test est réalisée simultanément à la deuxième étape de progression.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
la Fig. 1 montre, en perspective et en vue de dessus, un système d'application selon un premier mode de réalisation de l'invention,
la Fig. 2 montre en vue de côté et en coupe par un plan médian vertical, le système d'application de la Fig. 1,
la Fig. 3 montre en vue de dessus, un exemple de déplacement d'un système d'application selon l'invention,
la Fig. 4 montre, en perspective et en vue de dessus, un système d'application selon un deuxième mode de réalisation de l'invention,
la Fig. 5 montre, en perspective et en vue de dessous, le système d'application selon le deuxième mode de réalisation de l'invention,
la Fig. 6 montre, en perspective et en vue de dessus, un système d'application selon un troisième mode de réalisation de l'invention,
la Fig. 7 montre, en perspective et en vue de dessus, un système d'application selon un quatrième mode de réalisation de l'invention,
la Fig. 8 illustre schématiquement l'architecture d'une unité de contrôle du système d'application,
La Fig. 9 montre un algorithme d'un procédé d'application selon l'invention, et
La Fig. 10 montre en vue de côté et en coupe par un plan médian vertical, un système d'application selon un autre mode de réalisation.

### EXPOSE DETAILLE DE MODES DE REALISATION

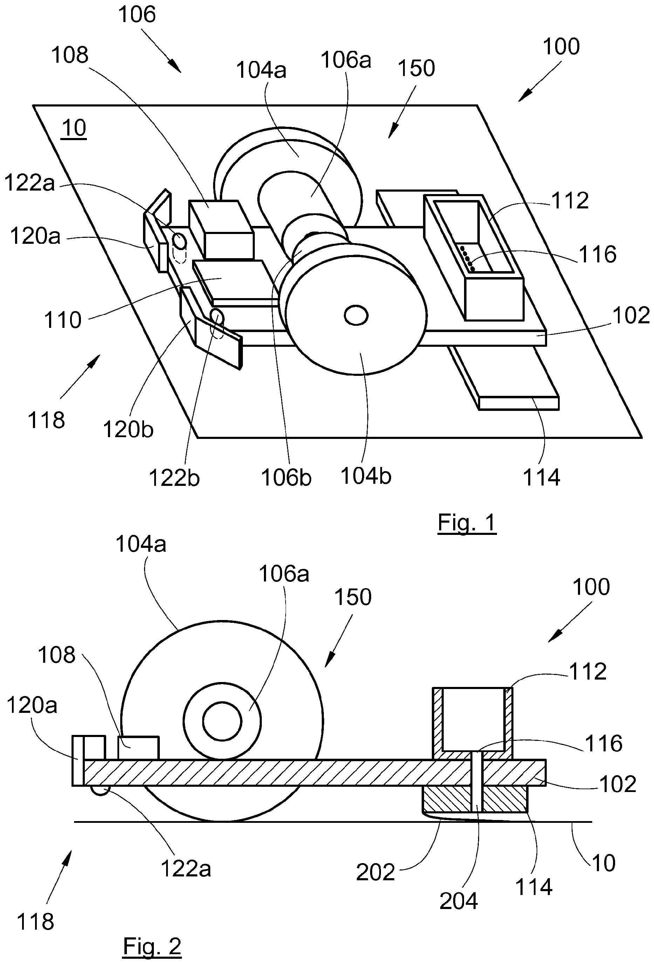

Dans la description qui suit, les termes relatifs à une position sont pris en référence à un système d'application en position d'utilisation, c'est-à-dire comme il est représenté sur les Figs. 1, 2 et 4 à 7.

La Fig. 1 et la Fig. 2 montrent un système d'application 100 selon un premier mode de réalisation qui permet de déposer un produit fluide sur une surface 10, comme par exemple un agent démoulant sur la surface d'un moule.

Le système d'application 100 comporte un châssis 102 monté sur un système de locomotion 150 assurant le déplacement du châssis 102 sur la surface 10.

Dans le mode de réalisation présenté sur les Figs. 1 et 2, le système de locomotion 150 comprend deux roues 104a-b et le système d'application 100 comporte un système de motorisation 106 entraînant les roues 104a-b en rotation.

Les roues 104a-b sont ici au nombre de deux, mais il pourrait y en avoir plus. Le système de motorisation 106 comporte par exemple un moteur commun aux différentes roues 104a-b et couplé à un mécanisme de rotation des roues 104a-b. De préférence, le système de motorisation 106 comporte un moteur 106a-b par roue 104a-b afin de contrôler indépendamment chaque roue 104a-b et en particulier la vitesse de rotation de chaque roue 104a-b. Ainsi le système de motorisation 106 peut générer un différentiel de vitesse de rotation des roues 104a-b qui permet la rotation du système d'application 100. Les positions des roues 104a-b sont connues par tous systèmes d'encodage connus comme par exemple un encodeur électromécanique, ou un codeur incrémental. Pour assurer un arrêt du système d'application 100, chaque ou au moins un moteur est équipé d'un frein.

Le châssis 102 porte également une batterie 108. Ainsi, le système d'application 100 est autonome en énergie.

Le châssis 102 porte également une unité de contrôle 110 qui est alimentée en courant par la batterie 108 et qui commande le système de motorisation 106.

Le système d'application 100 présente également un réservoir 112 monté sur le châssis 102 et recevant le produit fluide à appliquer.

Le système d'application 100 présente également une tête d'application 114 en liaison fluidique avec le réservoir 112, ici par l'intermédiaire d'au moins une buse d'alimentation 116 qui débouche dans la tête d'application 114 disposée en regard de la surface 10 à recouvrir. La tête d'application 114 comporte des moyens de répartition qui sont agencés pour répartir le produit fluide reçu de la buse d'alimentation 116 sur la surface 10. Les moyens de répartition sont agencés afin que le produit fluide soit déposé sur la surface 10 après le passage du système de locomotion 150 sur cette surface 10.

Selon une variante, le système d'application 100 comporte un chronomètre (non représenté) en liaison avec l'unité de contrôle 110.

En cours d'utilisation, le système d'application 100 se déplace sur la surface 10 grâce au système de locomotion 150 et le produit fluide est alors appliqué régulièrement grâce à la tête d'application 114 et son application est répétable.

Les moyens de répartition sont par exemple plusieurs buses d'éjection 204 réparties transversalement sous la tête d'application 114 et en liaison fluidique avec la buse d'alimentation 116. Chaque buse d'éjection 204 est ainsi alimentée en produit fluide par la buse d'alimentation 116 et projette une quantité déterminée de produit fluide sur la surface 10. Préférentiellement, la quantité de produit fluide projetée est identique d'une buse d'éjection 204 à l'autre.

La quantité de produit fluide qui s'écoule par chaque buse d'éjection 204 peut être commandée par l'unité de contrôle 110, par exemple par mise en place d'une pompe d'éjection appropriée qui capte le produit fluide dans le réservoir 112 par la buse d'alimentation 116 et expulse les produits fluides par les buses d'éjection 204. La pompe d'éjection est alors commandée par l'unité de contrôle 110.

Selon un autre mode de réalisation, la quantité de produit fluide qui s'écoule par chaque buse d'éjection 204 peut être commandée par l'unité de contrôle 110, par exemple par mise en place d'un compte-goutte.

Selon un autre mode de réalisation, la quantité de produit fluide qui est projetée par les buses d'éjection 204 est régulée par le diamètre des buses d'éjection 204.

Comme cela est représenté sur la Fig. 2, les moyens de répartition peuvent être constitués :
- d'un linge 202 qui est fixé à la tête d'application 114 et qui s'étend sous la tête d'application 114 et
- d'au moins une buse d'éjection 204 en liaison fluidique avec la buse d'alimentation 116 et disposée de manière à ce que le produit fluide s'écoulant de ladite au moins une buse d'éjection 204 imprègne le linge 202. Chaque buse d'éjection 204 est ainsi alimentée en produit fluide par la buse d'alimentation 116 et dépose une quantité déterminée de produit fluide sur le linge 202. Le linge 202 est ainsi imprégné de produit fluide et l'applique sur la surface 10 lors du déplacement du système d'application 100. La quantité de produit fluide qui s'écoule sur le linge 202 est régulée par le diamètre des buses d'éjection 204.

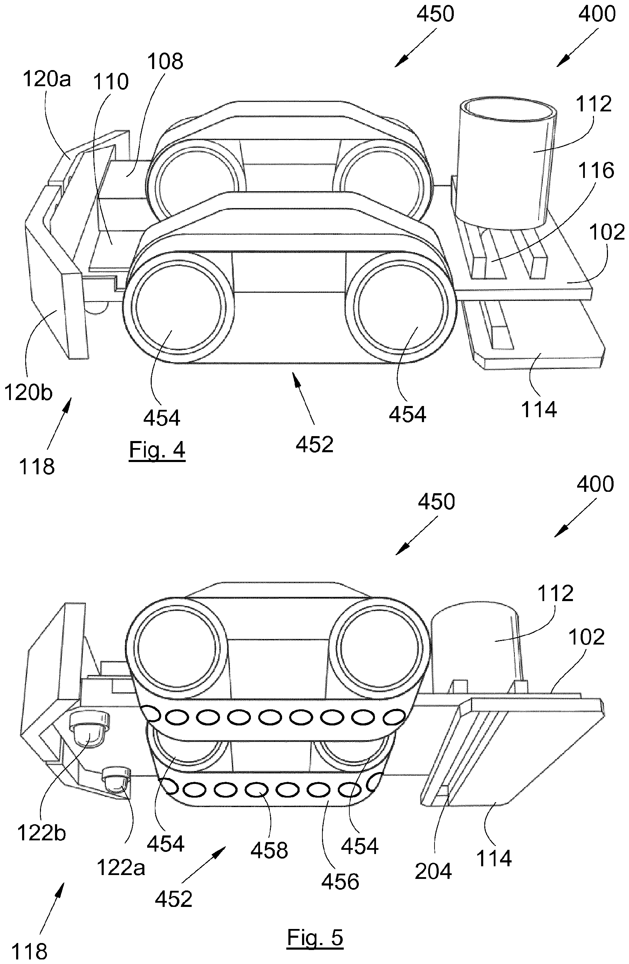

Les Figs. 4 et 5 montrent un système d'application 400 selon un deuxième mode de réalisation de l'invention qui est similaire au premier mode de réalisation sauf en ce qui concerne le système de locomotion 450.

Le système de locomotion 450 comprend deux chenilles 452 parallèles, chacune étant tendue entre deux roues 454 dont au moins une est entraînée en rotation par un système de motorisation.

La bande de roulement 456 de chaque chenille 452 comporte plusieurs ventouses 458. Chaque ventouse 458 est reliée fluidiquement à un dispositif de génération de vide du système d'application 400 par un circuit de dépression (non représentés) afin de générer du vide au niveau de chacune des ventouses 458 qui est au contact de la surface 10. Dans ce mode de réalisation, le dispositif d'application 400 peut être utilisé sur des moules de géométries complexes présentant des reliefs, tels que des surépaisseurs créées par des recouvrements de plis dans une pièce composite.

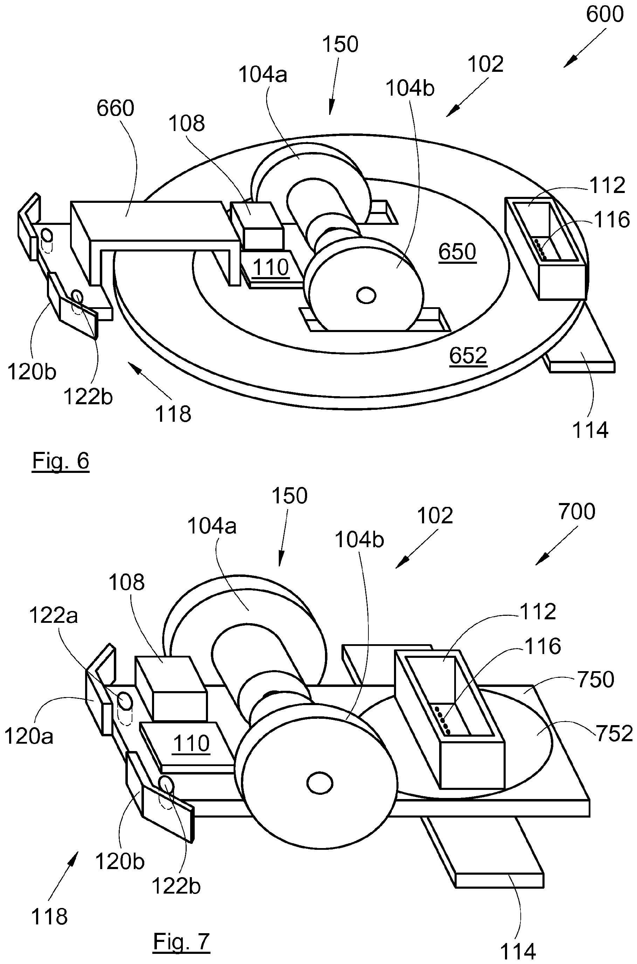

La Fig. 6 montre un système d'application 600 selon un troisième mode de réalisation de l'invention. Dans ce mode de réalisation, le système de locomotion 150 est identique à celui du premier mode de réalisation, mais il pourrait être identique à celui du deuxième mode de réalisation.

Le système d'application 600 se distingue du premier mode de réalisation par le fait que le châssis 102 comporte une partie principale 650 et une partie secondaire 652 qui est montée mobile en rotation autour de la partie principale 650. La partie principale 650 prend ainsi la forme d'un disque et la partie secondaire 652 prend la forme d'un anneau dont l'évidement circulaire intérieur reçoit la partie principale 650.

La partie principale 650 supporte le système de locomotion 150 et la partie secondaire 652 supporte le réservoir 112, la tête d'application 114 et la buse d'alimentation 116.

Une telle architecture permet de déposer du produit fluide autour du système d'application 600 en orientant la partie secondaire 652.

L'orientation de la partie secondaire 652 peut être réalisée manuellement ou mécaniquement en mettant en place un système motorisé approprié.

La Fig. 7 montre un système d'application 700 selon un quatrième mode de réalisation de l'invention. Dans ce mode de réalisation, le système de locomotion 150 est identique à celui du premier mode de réalisation, mais il pourrait être identique à celui du deuxième mode de réalisation.

Le système d'application 700 se distingue du premier mode de réalisation par le fait que le châssis 102 comporte une partie principale 750 et une partie secondaire 752 qui est montée mobile en rotation à l'intérieur de la partie principale 750. La partie principale 750 présente ainsi un évidement circulaire à l'intérieur duquel est monté la partie secondaire 752 sous la forme d'un disque.

La partie principale 750 supporte le système de locomotion 150 et la partie secondaire 752 supporte le réservoir 112, la tête d'application 114 et la buse d'alimentation 116.

Une telle architecture permet de d'appliquer une orientation particulière de la tête d'application 114 ou un mouvement rotatif du linge 202 lors de l'application du produit fluide.

L'orientation de la partie secondaire 752 peut être réalisée manuellement ou mécaniquement en mettant en place un système motorisé approprié.

Dans le troisième mode de réalisation et le quatrième mode de réalisation, la rotation de la partie secondaire 652, 752 s'effectue autour d'un axe de rotation perpendiculaire au plan de la surface 10.

Chaque système d'application 100, 400, 600, 700 présente un système de guidage 118 qui comporte des moyens pour détecter les obstacles autour du système d'application 100, 400, 600, 700. Le système de guidage 118 permet de détecter les obstacles tels que le vide et les obstacles frontaux. Le système de guidage 118 informe alors l'unité de contrôle 110 sur l'environnement du système d'application 100, 400, 600, 700 pour que l'unité de contrôle 110 commande le déplacement du système d'application 100 en conséquence. Ainsi, le système d'application 100, 400, 600, 700 est autonome dans son déplacement.

Dans le mode de réalisation de l'invention présenté sur les Figs. 1, 2 et 4 à 7, le système de guidage 118 comporte un ensemble de détecteurs d'obstacles qui comporte ici, dans le sens d'avancement du système d'application 100, 400, 600, 700:
- deux détecteurs de contact 120a-b disposés à l'avant du châssis 102, l'un à bâbord et l'autre à tribord, et
- deux détecteurs de vide 122a-b sous le châssis 102 et à l'avant du système de locomotion 150, 450, l'un à bâbord et l'autre à tribord.

Les détecteurs de contact 120a-b détectent lorsque le châssis 102 entre en contact avec une partie saillante (telle qu'une paroi). Du fait qu'il y a un détecteur de contact 120a-b de chaque côté, l'unité de contrôle 110 peut déterminer de quel côté est l'obstacle et ainsi engager un virage du côté approprié pour dégager le système d'application 100 dudit obstacle frontal.

Les détecteurs de vide 122a-b détectent lorsque l'avant du châssis 102 est au-dessus du vide. Comme pour les détecteurs de contact 120a-b, le fait qu'il y a un détecteur de vide 122a-b de chaque côté, permet à l'unité de contrôle 110 de déterminer de quel côté est le vide et ainsi engager un virage du côté approprié pour dégager le système d'application 100, 400, 600, 700 du vide et éviter sa chute.

Le système de guidage 118 est disposé à l'avant du système de locomotion 150, 450 ainsi l'obstacle (partie saillante ou vide) est détecté avant que le système de locomotion 150, 450 soit bloqué sur cet obstacle et l'unité de contrôle 110 peut engager les déplacements appropriés pour dégager le système d'application 100, 400, 600, 700 de l'obstacle.

Pour éviter que les roues 104a-b ou les chenilles 452 roulent sur le produit fluide juste appliqué, la tête d'application 114 et en particulier le linge 202 sont disposés à l'arrière du système de locomotion 150 dans le sens d'avancement du système d'application 100, 400, 600, 700 lors de l'application.

Dans le cas du troisième mode de réalisation, le système de guidage 118 est disposé sur une arche 660 dont une extrémité est solidaire de la partie principale 650 et dont l'autre extrémité se projette au-dessus de la partie secondaire 652, en avant de celle-ci dans le sens d'avancement du système d'application 600 lors de l'application du produit fluide et porte le système de guidage 118.

L'arche 660 est prévue pour permettre également le passage du réservoir 112 et de la tête d'application 114 lors de la rotation de la partie secondaire 652.

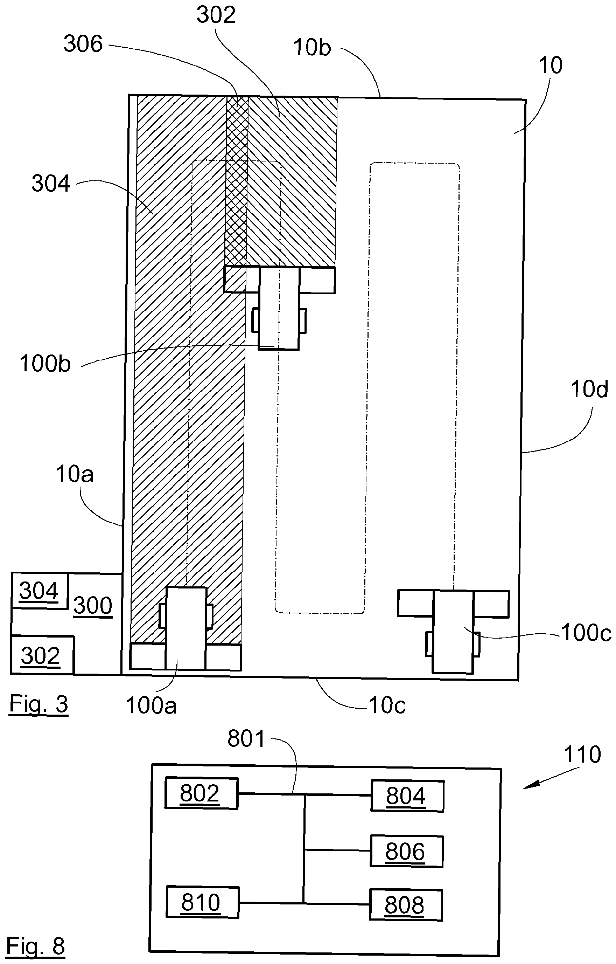

La Fig. 3 montre un exemple de déplacement du système d'application 100a-c sur la surface 10. Dans le mode de réalisation de la Fig. 3, le système d'application représenté est celui du premier mode de réalisation, mais le fonctionnement est identique pour les systèmes d'application des autres modes de réalisation. La référence 100a correspond au système d'application en position de départ, la référence 100c correspond au système d'application en position finale et la référence 100b correspond au système d'application en position intermédiaire entre la position de départ et la position finale.

Dans le mode de réalisation représenté sur la Fig. 3, la surface 10 est délimitée autour par du vide, mais dans un autre mode de réalisation, elle peut être délimitée par des parois ou par un mixte entre vide et parois. Chaque bord 10a-d de la surface 10 peut donc être délimité par du vide ou une paroi.

Pour recouvrir toute la surface 10 de produit fluide, le système d'application 100 est positionné en position de départ le long d'un premier bord 10a de la surface 10, le système d'application 100 progresse le long du premier bord 10a jusqu'à atteindre un deuxième bord 10b, le système d'application 100 fait alors demi-tour pour progresser en sens inverse jusqu'à rencontrer un troisième bord 10c. Le système d'application 100 fait alors des allers-retours entre le deuxième bord 10b et le troisième bord 10c en progressant du premier bord 10a vers le quatrième bord 10d. Lorsqu'il atteint le quatrième bord 10d, le système d'application 100 fait une dernière traversée pour atteindre la position finale.

Dans le mode de réalisation présenté sur la Fig. 3, la surface est rectangulaire, mais elle peut prendre une autre forme et le système d'application 100 se déplacera de la même manière afin de couvrir toute la surface 10.

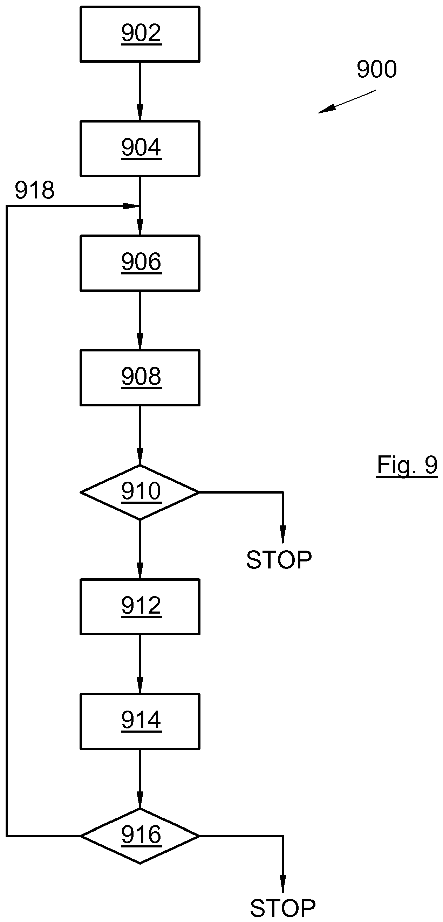

La Fig. 9 montre un algorithme d'un procédé d'application 900 d'un produit fluide à l'aide du système d'application 100, 400, 600, 700 consiste ainsi en :
- une étape de positionnement 902 au cours de laquelle le système d'application est positionné, par exemple manuellement, le long du premier bord 10a de la surface 10,
- une étape de pré-progression 904 au cours de laquelle le système d'application progresse le long du premier bord 10a jusqu'à atteindre le deuxième bord 10b,
- une première étape de réorientation 906 au cours de laquelle le système d'application 100 fait demi-tour,
- une première étape de progression 908 au cours de laquelle le système d'application progresse jusqu'à atteindre le troisième bord 10c,
- une première étape de test 910 au cours de laquelle, l'unité de contrôle 110 vérifie si toute la surface 10 a été recouverte avec du produit fluide,
dans le cas où toute la surface 10 a été recouverte, le procédé s'arrête,
dans le cas contraire, le procédé se poursuit par
- une deuxième étape de réorientation 912 au cours de laquelle le système d'application 100 fait demi-tour,
- une deuxième étape de progression 914 au cours de laquelle le système d'application progresse jusqu'à atteindre le deuxième bord 10b,
- une deuxième étape de test 916 au cours de laquelle, l'unité de contrôle 110 vérifie si toute la surface 10 a été recouverte avec du produit fluide,
dans le cas où toute la surface 10 a été recouverte, le procédé s'arrête,
dans le cas contraire, le procédé se poursuit par une étape de bouclage 918 au cours de laquelle le procédé boucle sur la première étape de réorientation 906.

Avantageusement, la première étape de test 910 est réalisée simultanément à la première étape de progression 908 et la deuxième étape de test 916 est réalisée simultanément à la deuxième étape de progression 914.

La détection des bords 10a-d pour suivre un bord ou pour détecter la fin d'une traversée est réalisée par le système de guidage 118, et selon la structure des bords 10a-d (vide ou parois), soit les détecteurs de contact 120a-b, soit les détecteurs de vide 122a-b, détectent les bords 10a-d.

La détection des bords 10a-d peut être également réalisée par enregistrement dans une mémoire du système d'application du plan de la surface 10.

Au cours de l'étape de pré-progression 904, de la première étape de réorientation 906, de la première étape de progression 908, de la deuxième étape de réorientation 912 et de la deuxième étape de progression 914, le produit fluide s'écoule de la tête d'application 114.

Bien sûr d'autres types de déplacements sont envisageables selon la topographie de la surface 10.

Le long de deux trajets voisins, le produit fluide déposé lors d'un passage recouvre en partie le produit fluide déposé lors du passage antérieur, ainsi, aucune partie de la surface 10 ne reste sans produit fluide. Sur la Fig. 3, le produit fluide 302 déposé après un demi-tour recouvre en partie le produit fluide 304 déposé avant le demi-tour.

Pour éviter que les roues 104a-b roulent dans le produit fluide déjà déposé, la tête d'application 114 s'étend transversalement au-delà des roues 104a-b et la largeur de la partie de recouvrement 306 est au maximum égale à la longueur de la tête d'application 114 qui dépasse au-delà des roues 104a-b.

L'indépendance entre les deux roues 104a-b permet au système d'application 100 d'effectuer des demi-tours relativement serrés.

La Fig. 8 représente l'architecture de l'unité de contrôle 110 qui comprend, reliés par un bus de communication 801: un processeur 802 ou CPU (« Central Processing Unit » en anglais) ; une mémoire vive RAM 804 (« Random Access Memory » en anglais) ; une mémoire morte ROM 806 (« Read Only Memory » en anglais) ; une unité de stockage telle qu'un disque dur ou un lecteur de support de stockage, tel qu'un lecteur de cartes SD 808 (« Secure Digital » en anglais) ; au moins une interface de communication 810, permettant par exemple au module de traitement de communiquer avec le système de motorisation 106 et le système de guidage 118.

Le processeur est capable d'exécuter des instructions chargées dans la RAM à partir de la ROM, d'une mémoire externe (non représentée), d'un support de stockage (tel qu'une carte SD), ou d'un réseau de communication. Lorsque l'équipement est mis sous tension, le processeur est capable de lire de la RAM des instructions et de les exécuter. Ces instructions forment un programme d'ordinateur causant la mise en oeuvre, par le processeur, de tout ou partie des algorithmes et étapes décrits ci-dessus.

Tout ou partie des algorithmes et étapes décrits ci-dessus peut être implémenté sous forme logicielle par exécution d'un ensemble d'instructions par une machine programmable, par exemple un DSP (« Digital Signal Processor » en anglais) ou un microcontrôleur, ou être implémenté sous forme matérielle par une machine ou un composant dédié, par exemple un FPGA (« Field-Programmable Gâte Array » en anglais) ou un ASIC (« Application-Specific Integrated Circuit » en anglais).

Dans une autre application, le système d'application 100 peut aussi être utilisé pour une étape de dépoussiérage du moule avant application du fluide ou pour une étape de lustrage du moule après application du fluide. Dans ces deux utilisations seul le linge 202 est utilisé et soit le réservoir 112 est vide, soit le réservoir 112 est équipé d'une vanne positionnée à la sortie du fluide, commandée mécaniquement par l'utilisateur ou électriquement par l'unité de contrôle 110 entre une position ouverte ou fermée.

Afin de visualiser la quantité de produit fluide qui est appliqué et ainsi s'assurer que la bonne quantité est appliquée, le réservoir 112 est gradué.

Pour pouvoir remplir le réservoir 112 en cours d'application, ou utiliser différents produits fluides, le réservoir 112 est de préférence amovible.

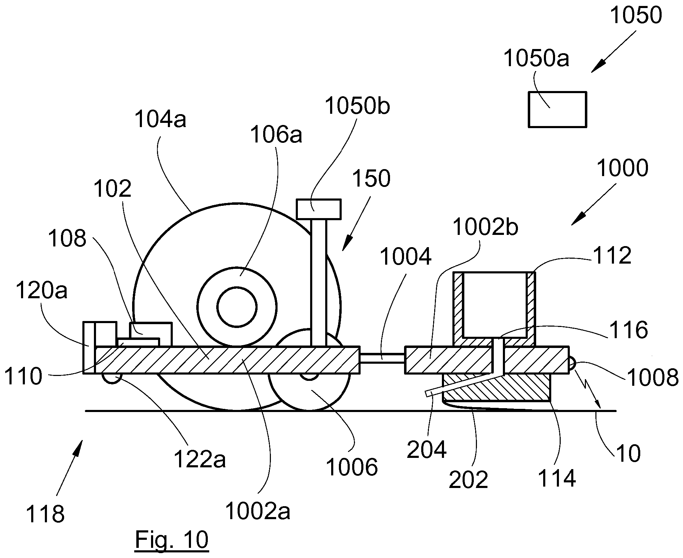

La Fig. 10 montre un système d'application 1000 qui comporte différentes options qui peuvent être mises en oeuvre dans le cadre de un ou plusieurs des systèmes d'application précédemment décrits.

Le châssis 102 des systèmes d'application des Figs. 1, 2, 4 et 5 peut être constitué d'un châssis tracteur 1002a et d'un châssis tracté 1002b. Le châssis tracteur 1002a porte entre autres le système de locomotion 150 avec les deux roues 104a-b et le système de motorisation 106 avec les moteurs 106a-b. Le châssis tracté 1002b porte entre autres la tête d'application 114 avec les moyens de répartition et les buses d'éjection 204.

La liaison entre le châssis tracteur 1002a et le châssis tracté 1002b est réalisée par une attache 1004 qui est souple afin de permettre un positionnement libre verticalement du châssis tracté 1002b par rapport au châssis tracteur 1002a. Ainsi, même en cas d'irrégularités de la surface 10, la tête d'application 114 et le linge 202 restent en contact avec ladite surface 10.

L'attache 1004 prend par exemple la forme d'un cardan.

Pour chacun des systèmes d'application précédemment décrits, les buses d'éjection 204 peuvent orientées vers l'avant de la tête d'application 114 de manière à asperger la surface 10 en avant du linge 202 en projetant de très fines gouttelettes du produit fluide.

Dans les modes de réalisation décrits ci-dessus, il a été plus particulièrement état décrit une progression du système d'application sous forme d'allers-retours, mais il est également possible d'enregistrer dans une mémoire du système d'application 1000 et plus particulièrement de l'unité de contrôle 110, un parcours à effectuer sur la surface 10 à partir d'un point de départ. Le système de guidage 118 est alors adapté à lire le parcours, à amener le système d'application 1000 au point de départ et à diriger le système d'application 1000 en fonction dudit parcours.

Pour sélectionner le parcours à suivre, il est possible d'installer une interface homme machine, tel qu'un écran tactile, par lequel l'opérateur sélectionne ledit parcours à télécharger dans la mémoire.

Il est également possible de prévoir une base de données dans laquelle chaque parcours pouvant être effectué est affecté à un code barre unique assignée à la surface 10. Le système d'application 1000 est alors pourvu d'un lecteur de code barre.

En apposant ou en réalisant le code barre correspondant à la surface 10 sur cette surface 10, lorsque le système d'application 1000 lit le code barre unique, il accède à la base de données et avec ce code barre unique, il retrouve le parcours à effectuer sur la surface 10 qu'il peut télécharger dans sa mémoire.

Pour des facilités de lecture, il est préférable de placer le lecteur code barre sous le système d'application, ainsi dès que le système d'application passe au-dessus du code barre, il le lit.

Pour guider le système d'application 1000 le long d'un parcours programmé sur la surface 10, le système d'application 1000 comporte un système de géolocalisation en intérieur 1050. Chacun des systèmes d'application précédemment décrits peut comporter un tel système de géolocalisation en intérieur 1050. Le système de géolocalisation en intérieur 1050 peut être basé sur différentes technologies. Dans le mode de réalisation de l'invention présenté sur la Fig. 10, le système de géolocalisation en intérieur 1050 comprend un émetteur 1050b fixé sur le système d'application 1000 et une base 1050a. La communication entre la base 1050a et l'émetteur 1050b permet de localiser le système d'application 1000 par rapport à la base 1050a. A titre d'exemple, la base 1050a est située sur un coté de la surface 10 qui doit être aspergée. Ainsi, le système d'application 1000 se repositionne après chaque demi-tour réalisé lorsqu'il progresse sur la surface 10.

Pour comptabiliser la distance parcourue par le système d'application 1000, celui-ci peut être équipé d'un odomètre 1006 qui comprend une roue qui roule sur la surface 10 et d'un compteur qui comptabilise le nombre de tours effectués par la roue pour en déduire la distance parcourue. Dans le mode de réalisation de la Fig. 10, l'odomètre 1006 est indépendant des roues 104a-b du système de locomotion 150, mais il est possible que la roue de l'odomètre 1006 soit l'une des roues 104a-b du système de locomotion 150.

La comparaison entre la distance parcourue ainsi mesurée et la position relevée par le système de géolocalisation en intérieur 1050 permet de corriger en permanence la position du système d'application 1000.

Pour que l'opérateur puisse vérifier que l'étalement du produit fluide s'effectue correctement, le système d'application 1000 est équipé d'au moins une lampe 1008, par exemple du type LED, disposée à l'arrière du système d'application 1000 pour éclairer la surface 10 à l'arrière de la tête d'application 114, et plus particulièrement à l'arrière du linge 202.

Pour absorber les irrégularités de la surface 10, chaque roue 104a-b est montée sur le châssis 102 par l'intermédiaire d'une suspension, comme par exemple un ressort.

La Fig. 3 montre également une station d'accueil 300 mobile qui est prévue pour supporter le système d'application 100 afin de pouvoir le positionner facilement. La station d'accueil 300 comporte un module de charge électrique 302 configuré pour charger la batterie 108 et un moyen de communication 304 en liaison avec un module de stockage et configuré pour transférer les données stockées sur l'unité de stockage du système d'application 100.

## Revendications

1. Système d'application (100, 400, 600, 700, 1000) pour déposer un produit fluide sur une surface (10), ledit système d'application (100, 400, 600, 700, 1000) comportant :
- un châssis (102) monté sur un système de locomotion (150, 450) assurant le déplacement du châssis (102) sur la surface (10),
- un réservoir (112) monté sur le châssis (102) et recevant le produit fluide à appliquer, et
- une tête d'application (114) en liaison fluidique avec le réservoir (112) par l'intermédiaire d'au moins une buse d'alimentation (116),
- un système de guidage (118) qui comporte des moyens pour détecter les obstacles autour du système d'application (100, 400, 600, 700, 1000),
le système d'application étant **caractérisé en ce que** la tête d'application (114) est disposée à l'arrière du système de locomotion (150) dans le sens d'avancement du système d'application (100, 400, 600, 700, 1000).

2. Système d'application (100, 400, 600, 700, 1000) selon la revendication 1, **caractérisé en ce que** la tête d'application (114) comporte plusieurs buses d'éjection (204) réparties transversalement sous la tête d'application (114) et en liaison fluidique avec la buse d'alimentation (116).

3. Système d'application (100, 400, 600, 700) selon l'une des revendications 1 ou 2, **caractérisé en ce que** la tête d'application (114) comporte :
- un linge (202) disposé sous la tête d'application (114) et
- au moins une buse d'éjection (204) en liaison fluidique avec la buse d'alimentation (116) et disposée de manière à ce que le produit fluide s'écoulant de ladite au moins une buse d'éjection (204) imprègne le linge (202).

4. Système d'application (1000) selon l'une des revendications 1 ou 2, **caractérisé en ce que** la tête d'application (114) comporte :
- un linge (202) disposé sous la tête d'application (114) et
- au moins une buse d'éjection (204) en liaison fluidique avec la buse d'alimentation (116) et disposée de manière à ce que le produit fluide s'écoulant de ladite au moins une buse d'éjection (204) soit projeté en avant du linge (202).

5. Système d'application (100, 400, 600, 700, 1000) selon l'une des revendications 1 à 4, **caractérisé en ce que** le système de guidage (118) comporte, dans le sens d'avancement du système d'application (100, 400, 600, 700, 1000) :
- deux détecteurs de contact (120a-b) disposés à l'avant du châssis (102), l'un à bâbord et l'autre à tribord, et
- deux détecteurs de vide (122a-b) sous le châssis (102) et à l'avant du système de locomotion (150), l'un à bâbord et l'autre à tribord.

6. Système d'application (1000) selon l'une des revendications 1 à 5, **caractérisé en ce que** le châssis (102) est constitué d'un châssis tracteur (1002a) et d'un châssis tracté (1002b), le châssis tracteur (1002a) portant le système de locomotion (150) et le système de motorisation (106), le châssis tracté (1002b) portant la tête d'application (114), et **en ce que** le châssis tracteur (1002a) et le châssis tracté (1002b) sont reliés par une attache (1004) souple.

7. Système d'application (600) selon l'une des revendications 1 à 5, **caractérisé en ce que** le châssis (102) comporte une partie principale (650) qui supporte le système de locomotion (150) et une partie secondaire (652) qui est montée mobile en rotation autour de la partie principale (650) et qui supporte le réservoir (112), la tête d'application (114) et la buse d'alimentation (116).

8. Système d'application (700) selon l'une des revendications 1 à 5, **caractérisé en ce que** le châssis (102) comporte une partie principale (750) qui supporte le système de locomotion (150) et une partie secondaire (752) qui est montée mobile en rotation à l'intérieur de la partie principale (750) et qui supporte le réservoir (112), la tête d'application (114) et la buse d'alimentation (116).

9. Système d'application (100, 600, 700) selon l'une des revendications 1 à 7, **caractérisé en ce que** le système de locomotion (150) comprend au moins deux roues (104a-b).

10. Système d'application (100, 600, 700) selon la revendication 9, **caractérisé en ce que** chaque roue (104a-b) est montée sur le châssis (102) par l'intermédiaire d'une suspension.

11. Système d'application (100, 600, 700) selon l'une des revendications 9 ou 10, **caractérisé en ce que** la tête d'application (114) s'étend transversalement au-delà des roues (104a-b).

12. Système d'application (400) selon l'une des revendications 1 à 7, **caractérisé en ce que** le système de locomotion (450) comprend deux chenilles (452) parallèles, **en ce que** la bande de roulement (456) de chaque chenille (452) comporte plusieurs ventouses (458), et **en ce que** le système d'application (400) comporte un dispositif de génération de vide relié fluidiquement à chaque ventouse (458) afin de générer du vide au niveau de chacune des ventouses (458) en contact avec la surface (10).

13. Système d'application (1000) selon l'une des revendications 1 à 12, **caractérisé en ce qu'**il comporte au moins une lampe (1008) disposée à l'arrière du système d'application (1000) pour éclairer la surface (10) à l'arrière de la tête d'application (114).

14. Système d'application (1000) selon l'une des revendications 1 à 13, **caractérisé en ce qu'**il comporte une mémoire prévue pour enregistrer un parcours à effectuer sur la surface (10) à partir d'un point de départ, et **en ce que** le système de guidage (118) est adapté à lire le parcours, à amener le système d'application (1000) au point de départ et à diriger le système d'application (1000) en fonction dudit parcours.

15. Procédé d'application d'un produit fluide à l'aide d'un système d'application (100, 400, 600, 700) selon l'une des revendications précédentes, le procédé consistant en :
- une étape de positionnement au cours de laquelle le système d'application est positionné le long d'un premier bord (10a) de la surface (10),
- une étape de pré-progression au cours de laquelle le système d'application progresse le long du premier bord (10a) jusqu'à atteindre un deuxième bord (10b),
- une première étape de réorientation au cours de laquelle le système d'application (100) fait demi-tour,
- une première étape de progression au cours de laquelle le système d'application progresse jusqu'à atteindre un troisième bord (10c),
- une première étape de test au cours de laquelle, l'unité de contrôle (110) vérifie si toute la surface (10) a été recouverte avec du produit fluide,
dans le cas où toute la surface (10) a été recouverte, le procédé s'arrête,
dans le cas contraire, le procédé se poursuit par
- une deuxième étape de réorientation au cours de laquelle le système d'application (100) fait demi-tour,
- une deuxième étape de progression au cours de laquelle le système d'application progresse jusqu'à atteindre le deuxième bord (10b),
- une deuxième étape de test au cours de laquelle, l'unité de contrôle (110) vérifie si toute la surface (10) a été recouverte avec du produit fluide,
dans le cas où toute la surface (10) a été recouverte, le procédé s'arrête,
dans le cas contraire, le procédé se poursuit par une étape de bouclage au cours de laquelle le procédé boucle sur la première étape d'orientation.

16. Procédé d'application selon la revendication 15, **caractérisé en ce que** la première étape de test (910) est réalisée simultanément à la première étape de progression (908) et la deuxième étape de test (916) est réalisée simultanément à la deuxième étape de progression (914).

## Patentansprüche

1. Auftragsystem (100, 400, 600, 700, 1000) zum Aufbringen eines fluiden Produkts auf eine Fläche (10), wobei das Auftragsystem (100, 400, 600, 700, 1000) aufweist:
- ein Fahrgestell (102), das auf ein Fortbewegungssystem (150, 450) montiert ist, das die Verschiebung des Fahrgestells (102) auf der Fläche (10) gewährleistet,
- einen Behälter (112), der auf das Fahrgestell (102) montiert ist und das aufzutragende fluide Produkt empfängt, und
- einen Auftragkopf (114) in Fluidverbindung mit dem Behälter (112) mittels mindestens einer Versorgungsdüse (116),
- ein Führungssystem (118), das Einrichtungen aufweist, um die Hindernisse um das Auftragsystem (100, 400, 600, 700, 1000) herum zu erfassen,
wobei das Auftragsystem **dadurch gekennzeichnet ist, dass** der Auftragkopf (114) in der Vorschubrichtung des Auftragsystems (100, 400, 600, 700, 1000) an der Rückseite des Fortbewegungssystems (150) angeordnet ist.

2. Auftragsystem (100, 400, 600, 700, 1000) nach Anspruch 1, **dadurch gekennzeichnet, dass** der Auftragkopf (114) mehrere Ausstoßdüsen (204) aufweist, die quer unter dem Auftragkopf (114) verteilt sind und mit der Versorgungsdüse (116) in Fluidverbindung stehen.

3. Auftragsystem (100, 400, 600, 700) nach einem der Ansprüche 1 oder 2, **dadurch gekennzeichnet, dass** der Auftragkopf (114) aufweist:
- ein unter dem Auftragkopf (114) angeordnetes Tuch (202), und
- mindestens eine Ausstoßdüse (204) in Fluidverbindung mit der Versorgungsdüse (116) und so angeordnet, dass das aus der mindestens einen Ausstoßdüse (204) fließende fluide Produkt das Tuch (202) benetzt.

4. Auftragsystem (1000) nach einem der Ansprüche 1 oder 2, **dadurch gekennzeichnet, dass** der Auftragkopf (114) aufweist:
- ein unter dem Auftragkopf (114) angeordnetes Tuch (202), und
- mindestens eine Ausstoßdüse (204) in Fluidverbindung mit der Versorgungsdüse (116) und so angeordnet, dass das aus der mindestens einen Ausstoßdüse (204) fließende fluide Produkt vor das Tuch (202) projiziert wird.

5. Auftragsystem (100, 400, 600, 700, 1000) nach einem der Ansprüche 1 bis 4, **dadurch gekennzeichnet, dass** das Führungssystem (118) in der Vorschubrichtung des Auftragsystems (100, 400, 600, 700, 1000) aufweist:
- zwei Kontaktdetektoren (120a-b), die vor dem Fahrgestell (102) angeordnet sind, einer auf der Backbordseite und der andere auf der Steuerbordseite, und
- zwei Vakuumdetektoren (122a-b) unter dem Fahrgestell (102) und vor dem Fortbewegungssystem (150), einer an der Backbordseite und der andere an der Steuerbordseite.

6. Auftragsystem (1000) nach einem der Ansprüche 1 bis 5, **dadurch gekennzeichnet, dass** das Fahrgestell (102) aus einem ziehenden Fahrgestell (1002a) und aus einem gezogenen Fahrgestell (1002b) besteht, wobei das ziehende Fahrgestell (1002a) das Fortbewegungssystem (150) und das Antriebssystem (106) trägt, das gezogene Fahrgestell (1002b) den Auftragkopf (114) trägt, und dass das ziehende Fahrgestell (1002a) und das gezogene Fahrgestell (1002b) durch eine biegsame Befestigung (1004) verbunden sind.

7. Auftragsystem (600) nach einem der Ansprüche 1 bis 5, **dadurch gekennzeichnet, dass** das Fahrgestell (102) einen Hauptteil (650), der das Fortbewegungssystem (150) trägt, und einen Sekundärteil (652) aufweist, der um den Hauptteil (650) herum drehbeweglich montiert ist und den Behälter (112), den Auftragkopf (114) und die Versorgungsdüse (116) trägt.

8. Auftragsystem (700) nach einem der Ansprüche 1 bis 5, **dadurch gekennzeichnet, dass** das Fahrgestell (102) einen Hauptteil (750), der das Fortbewegungssystem (150) trägt, und einen Sekundärteil (752) aufweist, der drehbeweglich im Inneren des Hauptteils (750) montiert ist und den Behälter (112), den Auftragkopf (114) und die Versorgungsdüse (116) trägt.

9. Auftragsystem (100, 600, 700) nach einem der Ansprüche 1 bis 7, **dadurch gekennzeichnet, dass** das Fortbewegungssystem (150) mindestens zwei Räder (104a-b) enthält.

10. Auftragsystem (100, 600, 700) nach Anspruch 9, **dadurch gekennzeichnet, dass** jedes Rad (104a-b) mittels einer Aufhängung an das Fahrgestell (102) montiert ist.

11. Auftragsystem (100, 600, 700) nach einem der Ansprüche 9 oder 10, **dadurch gekennzeichnet, dass** der Auftragkopf (114) sich quer jenseits der Räder (104a-b) erstreckt.

12. Auftragsystem (400) nach einem der Ansprüche 1 bis 7, **dadurch gekennzeichnet, dass** das Fortbewegungssystem (450) zwei parallele Laufketten (452) enthält, dass der Laufstreifen (456) jeder Laufkette (452) mehrere Saugnäpfe (458) aufweist, und dass das Auftragsystem (400) eine Vakuumerzeugungsvorrichtung aufweist, die mit jedem Saugnapf (458) in Fluidverbindung steht, um im Bereich jedes der Saugnäpfe (458) in Kontakt mit der Fläche (10) ein Vakuum zu erzeugen.

13. Auftragsystem (1000) nach einem der Ansprüche 1 bis 12, **dadurch gekennzeichnet, dass** es mindestens eine Lampe (1008) aufweist, die an der Rückseite des Auftragsystems (1000) angeordnet ist, um die Fläche (10) hinter dem Auftragkopf (114) zu beleuchten.

14. Auftragsystem (1000) nach einem der Ansprüche 1 bis 13, **dadurch gekennzeichnet, dass** es einen Speicher aufweist, der vorgesehen ist, um eine auf der Fläche (10) ausgehend von einem Ausgangspunkt auszuführende Fahrstrecke zu speichern, und dass das Führungssystem (118) die Fahrstrecke ablesen, das Auftragsystem (1000) zum Ausgangspunkt bringen und das Auftragsystem (1000) abhängig von der Fahrstrecke lenken kann.

15. Auftragverfahren eines fluiden Produkts mit Hilfe eines Auftragsystems (100, 400, 600, 700) nach einem der vorhergehenden Ansprüche, wobei das Verfahren besteht aus:
- einen Positionierungsschritt, während dessen das Auftragsystem entlang eines ersten Rands (10a) der Fläche (10) positioniert wird,
- einen Schritt des vorhergehenden Vorrückens, während dessen das Auftragsystem entlang des ersten Rands (10a) vorrückt, bis es einen zweiten Rand (10b) erreicht,
- einen ersten Schritt der Neuausrichtung, während dessen das Auftragsystem (100) umkehrt,
- einen ersten Vorrückschritt, während dessen das Auftragsystem vorrückt, bis es einen dritten Rand (10c) erreicht,
- einen ersten Testschritt, während dessen die Kontrolleinheit (110) überprüft, ob die ganze Fläche (10) mit fluidem Produkt bedeckt wurde,
in dem Fall, in dem die ganze Fläche (10) bedeckt wurde, stoppt das Verfahren,
im gegenteiligen Fall setzt das Verfahren sich fort durch
- einen zweiten Schritt der Neuausrichtung, während dessen das Auftragsystem (100) umkehrt,
- einen zweiten Schritt des Vorrückens, während dessen das Auftragsystem vorrückt, bis es den zweiten Rand (10b) erreicht,
- einen zweiten Testschritt, während dessen die Kontrolleinheit (110) überprüft, ob die ganze Fläche (10) mit fluidem Produkt bedeckt wurde,
in dem Fall, in dem die ganze Fläche (10) bedeckt wurde, stoppt das Verfahren,
im gegenteiligen Fall setzt das Verfahren sich durch einen Schritt einer Schleifenbildung fort, während dessen das Verfahren auf den ersten Ausrichtungsschritt rückschleift.

16. Auftragverfahren nach Anspruch 15, **dadurch gekennzeichnet, dass** der erste Testschritt (910) gleichzeitig mit dem ersten Schritt des Vorrückens (908) und der zweite Testschritt (916) gleichzeitig mit dem zweiten Schritt des Vorrückens (914) durchgeführt wird.

## Claims

1. Application system (100, 400, 600, 700, 1000) for depositing a fluid product on a surface (10), said application system (100, 400, 600, 700, 1000) comprising:
- a frame (102) mounted on a locomotive system (150, 450) ensuring the displacement of the frame (102) over the surface (10),
- a tank (112) mounted on the frame (102) and receiving the fluid product to be applied, and
- an application head (114) fluidically connected with the tank (112) via at least one supply nozzle (116),
- a guiding system (118) which comprises means for detecting the obstacles around the application system (100, 400, 600, 700, 1000),
the application system being **characterized in that** the application head (114) is arranged at the rear of the locomotive system (150) in the direction of advance of the application system (100, 400, 600, 700, 1000).

2. Application system (100, 400, 600, 700, 1000) according to Claim 1, **characterized in that** the application head (114) comprises several ejection nozzles (204) distributed transversely under the application head (114) and fluidically connected with the supply nozzle (116).

3. Application system (100, 400, 600, 700) according to one of Claim 1 or 2, **characterized in that** the application head (114) comprises:
- a cloth (202) arranged under the application head (114) and
- at least one ejection nozzle (204) fluidically connected with the supply nozzle (116) and arranged so that the fluid product flowing from said at least one ejection nozzle (204) soaks the cloth (202).

4. Application system (1000) according to one of Claim 1 or 2, **characterized in that** the application head (114) comprises:
- a cloth (202) arranged under the application head (114) and
- at least one ejection nozzle (204) fluidically connected with the supply nozzle (116) and arranged so that the fluid product flowing from said at least one ejection nozzle (204) is projected in front of the cloth (202).

5. Application system (100, 400, 600, 700, 1000) according to one of Claims 1 to 4, **characterized in that** the guiding system (118) comprises, in the direction of advance of the application system (100, 400, 600, 700, 1000):
- two contact detectors (120a-b) arranged at the front of the frame (102), one on the port side and the other on the starboard side, and
- two void detectors (122a-b) under the frame (102) and at the front of the locomotive system (150), one on the port side and the other on the starboard side.

6. Application system (1000) according to one of Claims 1 to 5, **characterized in that** the frame (102) is made of a towing frame (1002a) and a drawn frame (1002b), the towing frame (1002a) carrying the locomotive system (150) and the motor-drive system (106), the drawn frame (1002b) carrying the application head (114), and **in that** the towing frame (1002a) and the drawn frame (1002b) are linked by a flexible fastener (1004).

7. Application system (600) according to one of Claims 1 to 5, **characterized in that** the frame (102) comprises a main part (650) which supports the locomotive system (150) and a secondary part (652) which is mounted to be rotationally mobile around the main part (650) and which supports the tank (112), the application head (114) and the supply nozzle (116).

8. Application system (700) according to one of Claims 1 to 5, **characterized in that** the frame (102) comprises a main part (750) which supports the locomotive system (150) and a secondary part (752) which is mounted to be rotationally mobile inside the main part (750) and which supports the tank (112), the application head (114) and the supply nozzle (116).

9. Application system (100, 600, 700) according to one of Claims 1 to 7, **characterized in that** the locomotive system (150) comprises at least two wheels (104a-b).

10. Application system (100, 600, 700) according to Claim 9, **characterized in that** each wheel (104a-b) is mounted on the frame (102) through a suspension.

11. Application system (100, 600, 700) according to Claim 9 or 10, **characterized in that** the application head (114) extends transversely beyond the wheels (104a-b).

12. Application system (400) according to one of Claims 1 to 7, **characterized in that** the locomotive system (450) comprises two parallel tracks (452), **in that** the tread (456) of each track (452) comprises several suckers (458), and **in that** the application system (400) comprises a vacuum generation device fluidically connected to each sucker (458) in order to generate vacuum at each of the suckers (458) in contact with the surface (10).

13. Application system (1000) according to one of Claims 1 to 12, **characterized in that** it comprises at least one light (1008) arranged at the rear of the application system (1000) to illuminate the surface (10) at the rear of the application head (114).

14. Application system (1000) according to one of Claims 1 to 13, **characterized in that** it comprises a memory intended to record a path to follow on the surface (10) from a start point, and **in that** the guiding system (118) is adapted to read the path, brings the application system (1000) to the start point and leads the application system (1000) according to said path.

15. Method for applying a fluid product using an application system (100, 400, 600, 700) according to one of the preceding claims, the method consisting in:
- a positioning step during which the application system is positioned along a first edge (10a) of the surface (10),
- a pre-progression step during which the application system progresses along the first edge (10a) until it reaches a second edge (10b),
- a first reorientation step during which the application system (100) makes a half-turn,
- a first progression step during which the application system progresses until it reaches a third edge (10c),
- a first test step during which the control unit (110) checks to see if all the surface (10) has been covered with fluid product,
in the case where all the surface (10) has been covered, the method is stopped,
otherwise, the method is continued by
- a second reorientation step during which the application system (100) makes a half-turn,
- a second progression step during which the application system progresses until it reaches the second edge (10b),
- a second test step during which the control unit (110) checks to see if all the surface (10) has been covered with fluid product,
in the case where all the surface (10) has been covered, the method is stopped,
otherwise, the method is continued by a loop back step during which the method loops back to the first orientation step.

16. Method for applying according to Claim 15, **characterized in that** the first test step (910) is realized simultaneously with the first progression step (908) and the second test step (916) is realized simultaneously with the second progression step (914).
